(19)

Europäisches
Patentamt

European
Patent Office

Office européen
des brevets

(11) **EP 3 391 579 B1**

(12) **EUROPEAN PATENT SPECIFICATION**

(45) Date of publication and mention
of the grant of the patent:
**25.09.2019 Bulletin 2019/39**

(21) Application number: **16826202.0**

(22) Date of filing: **19.12.2016**

(51) Int Cl.:
**H04L 5/00** (2006.01)          **H04L 27/26** (2006.01)

(86) International application number:
**PCT/SE2016/051285**

(87) International publication number:
**WO 2017/105338 (22.06.2017 Gazette 2017/25)**

(54) **TRANSMITTING AND RECEIVING NARROWBAND SYNCHRONIZATION SIGNALS**

SENDEN UND EMPFANGEN VON SCHMALBANDIGEN REFERENZSIGNALEN

ÉMISSION ET RÉCEPTION DE SIGNAUX DE SYNCHRONISATION À BANDE ÉTROITE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.12.2015 US 201562269662 P**

(43) Date of publication of application:
**24.10.2018 Bulletin 2018/43**

(73) Proprietor: **Telefonaktiebolaget LM Ericsson
(PUBL)
164 83 Stockholm (SE)**

(72) Inventors:
• **ADHIKARY, Ansuman**
**Telangana 500081**
**Hyderabad (IN)**
• **WANG, Yi-Pin Eric**
**Fremont, California 94539 (US)**
• **LIN, Xingqin**
**Santa Clara 95054 (US)**
• **JOHANSSON, Niklas**
**SE-753 29 Uppsala (SE)**
• **GRÖVLEN, Asbjörn**
**SE-112 15 Stockholm (SE)**
• **SUI, Yutao**
**SE-171 67 Solna (SE)**

(74) Representative: **Ericsson
Patent Development
Torshamnsgatan 21-23
164 80 Stockholm (SE)**

(56) References cited:
• **HUAWEI ET AL: "NB-IOT - downlink physical
layer concept description", 3GPP DRAFT;
R1-156462, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE , vol. RAN
WG1, no. Anaheim, USA; 20151115 - 20151122 15
November 2015 (2015-11-15), XP051039851,
Retrieved from the Internet:
URL:http://www.3gpp.org/ftp/Meetings_3GPP_
SYNC/RAN1/Docs/ [retrieved on 2015-11-15]**
• **ERICSSON ET AL: "NB-LTE - General L1 Concept
Description", 3GPP DRAFT; R1-156010 - NB-LTE
- GENERAL L1 CONCEPT DESCRIPTION, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE , vol. RAN WG1, no. Malmo,
Sweden; 20151005 - 20151009 4 October 2015
(2015-10-04), XP051039789, Retrieved from the
Internet:
URL:http://www.3gpp.org/ftp/Meetings_3GPP_
SYNC/RAN1/Docs/ [retrieved on 2015-10-04]**

**Description**

TECHNICAL FIELD

The present application generally relates to transmission and reception of synchronization signals, and particular relates to transmission and reception of a narrowband primary synchronization signal and a narrowband secondary synchronization signal within a synchronization signal period.

BACKGROUND

A wireless communication device performs a procedure known as cell search in order to find and synchronize to one of the cells in a cellular communication system. Synchronizing to a cell involves synchronizing the device's transmission and reception timing to the cell's transmission and reception timing. For example, transmissions may be performed according to a timing structure that is specified at a relatively high level of granularity in terms of "frames" (e.g., 10ms), at a lower level of granularity in terms of "sub-frames" (e.g., 1ms), and at yet a lower level of granularity in terms of "symbols". Synchronization in this case therefore includes acquiring the frame and symbol timing of a cell (i.e., acquiring symbol-level timing alignment with the frame structure of a cell). Synchronization may also include acquiring frequency synchronization to the cell (e.g., correcting for frequency offset), obtaining an identifier of the cell, and acquiring an absolute frame number reference.

Cell search is typically achieved by periodically transmitting one or more known sequences to facilitate detection. The one or more known sequences are referred to collectively as a "synchronization signal". In some systems, a synchronization signal includes multiple different component signals that serve different purposes in synchronization. These component signals include a primary synchronization signal (PSS) and a secondary synchronization signal (SSS) in some systems, such as Wideband Code Division Multiplexing (WCDMA) and Long Term Evolution (LTE) systems. The PSS alone may for instance facilitate timing synchronization at a coarse resolution (e.g., on a symbol basis), whereas the PSS in combination with the SSS facilitates timing synchronization at a finer resolution (e.g., on a frame basis).

Synchronization proves challenging in certain contexts. In particular, cellular communication systems are currently being developed and improved for machine type communication (MTC). MTC is characterized by lower demands on data rates than for example mobile broadband, but with higher requirements on e.g. low cost device design, better coverage, and ability to operate for years on batteries without charging or replacing the batteries. Currently, the 3rd generation partnership project (3GPP) is standardizing a feature called Narrowband Internet of Things (NB-IoT) for satisfying all the requirements put forward by MTC type applications, while maintaining backward compatibility with the current LTE radio access technology. NB-IoT transmissions may occur in-band of a wideband LTE transmission, within a guard band of a wideband LTE transmission, or in standalone spectrum. Regardless, synchronization in a NB-IoT environment proves challenging because NB-IoT devices may need to operate at very low signal to noise ratios (SNRs). This means that narrowband synchronization signal design should be extremely robust to be able to operate at a wide range of SNRs, yet still provide backwards compatibility. Known narrowband synchronization signal designs fall short in this regard.

The following document:
ERICSSON ET AL: "NB-LTE - General L1 Concept Description", 3GPP DRAFT; R1-156010, 4 October 2015 discloses the mapping of narrowband PSS and SSS with higher and lower density options. In addition, the following document:
HUAWEI ET AL: "NB-IOT - downlink physical layer concept description", 3GPP DRAFT; R1 -156462, 15 November 2015 discloses the mapping of narrowband PSS, SSS and PBCH across subframes and frames.

SUMMARY

The invention is defined by the appended claims; embodiments not falling under the scope of the claims should be interpreted as examples useful for understanding the invention.

A radio network node (e.g., a base station) according to some embodiments herein transmits a narrowband primary synchronization signal (NB-PSS) and a narrowband secondary synchronization signal (NB-SSS) within a synchronization signal period comprising multiple frames. The radio network node maps the NB-PSS to the same one or more subframes within each frame in which the NB-PSS is to be transmitted. The radio network node similarly maps the NB-SSS to the same one or more subframes within each frame in which the NB-SSS is to be transmitted. This includes at least one frame in which the NB-PSS is to be transmitted (i.e., the NB-PSS and NB-SSS are to be transmitted in the same frame, for at least one frame in the synchronization signal period). The radio network node accomplishes this by mapping the NB-SSS to one or more subframes that differ from the one or more subframes to which the NB-PSS is mapped. The radio network node then transmits the NB-PSS and NB-SSS within the synchronization signal period according to this mapping. In some embodiments, for instance, the radio network node transmits the NB-SSS in every other frame in which the NB-PSS is transmitted.

Transmitting the NB-PSS and NB-SSS in this way advantageously facilitates higher synchronization signal density within the synchronization signal period. Indeed, by transmitting the NB-PSS and NB-SSS in different subframes (i.e., with different subframe positions in time), the NB-PSS transmission density is not constrained by potential collision with the NB-SSS transmission. In fact, the NB-PSS in some embodiments is even transmitted within every frame of the synchronization signal period. Transmitting the NB-PSS with higher density in time translates into synchronization that proves more robust in the face of low SNR.

In at least some embodiments, a radio network node herein maps the NB-PSS and NB-SSS to certain select subframes, e.g., in order to ensure or at least maximize backwards compatibility. For example, in one or more embodiments, the radio network node maps each of the NB-PSS and NB-SSS exclusively to one or more subframes that are immune to configuration as low interference subframes and/or are downlink subframes in all or a majority of possible time division duplex configurations of the radio network node. Alternatively or additionally, the radio network node may map each of the NB-PSS and NB-SSS exclusively to subframes that lack transmission of system information on a broadcast channel.

Regardless, in one or more embodiments, the radio network node transmits the NB-PSS in every frame of the synchronization signal period. Alternatively, radio network node transmits the NB-PSS in only odd-numbered frames of the synchronization signal period.

Additionally or alternatively, the radio network node transmits the NB-SSS in only one frame of the synchronization signal period. Alternatively, the radio network node transmits the NB-SSS in each frame in which the NB-PSS is transmitted.

In some embodiments, the radio network node transmits the NB-SSS in only even-numbered frames of the synchronization signal period.

In some embodiments, the radio network node maps the NB-SSS to only a single subframe within each frame in which the NB-SSS is to be transmitted. For example, in some embodiments, the radio network node maps the NB-SSS to subframe 9 within each frame in which the NB-SSS is to be transmitted.

In some embodiments, the radio network node maps the NB-PSS to only a single subframe within each frame in which the NB-PSS is to be transmitted. For example, in some embodiments, the radio network node maps the NB-PSS to subframe 5 within each frame in which the NB-PSS is to be transmitted. Regardless, in order to map the NB-PSS to only a single subframe, the radio network node may generate the NB-PSS from the sum of two base NB-PSS sequences.

In one or more embodiments, the radio network node maps each of the NB-PSS and NB-SSS exclusively to one or more subframes that are immune to configuration as low interference subframes and are downlink subframes in all or a majority of possible time division duplex configurations of the radio network node. Alternatively or additionally, the radio network node maps each of the NB-PSS and NB-SSS exclusively to one or more subframes that lack transmission of system information on a broadcast channel.

In some embodiments, the radio network node generates the NB-PSS as different base NB-PSS sequences, and transmits the NB-PSS by transmitting different respective ones of the base NB-PSS sequences in different frames of the synchronization signal period, with only one base NB-PSS sequence transmitted in any given frame. In this case, the different base NB-PSS sequences may comprise two base NB-PSS sequences, and the radio network node may transmit the NB-PSS within select frames of the synchronization signal period. The radio network node may then alternate every other one of the select frames between transmitting one of the two base NB-PSS sequences and transmitting the other of the two base NB-PSS sequences.

In one or more embodiments, the radio network node transmits the NB-PSS and/or the NB-SSS to indicate one or more parameters. The one or more parameters may include one or more of: a narrowband deployment type indicating whether narrowband transmissions from the radio network node are in-band of a wideband transmission, in a guard band of a wideband transmission, or standalone; a transmission resource index indicating a location of narrowband transmissions that are located in-band of a wideband transmission; and an operation mode of the radio network node indicating whether the radio network node is operating in a frequency division duplexing mode or a time division duplexing mode.

In some embodiments, the radio network node selects a length of a cyclic prefix with which to transmit the NB-PSS and NB-SSS. In this case, the radio network node may generate the NB-PSS in different ways for different selected lengths, by using the same one or more base NB-PSS sequences, irrespective of the selected length, but using different puncturing patterns for different selected lengths. By contrast, the radio network node may generate the NB-SSS in the same way for different selected lengths.

In any or all of these embodiments, the NB-PSS and NB-SSS may be narrowband internet of things (IoT) synchronization signals. In such a case, the synchronization signal period may be 80ms, a frame may be 10ms, and a subframe may be 1ms.

Embodiments herein further include a method implemented by a wireless communication device (e.g., a user equipment) for receiving a narrowband primary synchronization signal (NB-PSS) and a narrowband secondary synchronization signal (NB-SSS) within a synchronization signal period comprising multiple frames. The method comprises receiving the NB-PSS and NB-SSS within the synchronization signal period. This may include for instance receiving the NB-SSS in every other frame in which the NB-PSS is received. The method further entails de-mapping the NB-PSS from the same one or more subframes within each frame in which the NB-PSS is received. The method also includes de-mapping the NB-SSS from the same one or more subframes within each frame in which the NB-SSS is received, including at least one frame in which the NB-PSS is received, by de-mapping the NB-SSS from one or more subframes that differ from the one or more subframes from which the NB-PSS is de-mapped.

In some embodiments, the wireless communication device receives the NB-PSS in every frame of the synchronization signal period. Alternatively, the wireless communication device receives the NB-PSS in only odd-numbered frames of the synchronization signal period.

In some embodiments, the wireless communication device receives the NB-SSS in only even-numbered frames of the synchronization signal period.

Alternatively or additionally, the wireless communication device receives the NB-SSS in only one frame of the synchronization signal period. Alternatively, the wireless communication device receives the NB-SSS in each frame in which the NB-PSS is received.

In one or more embodiments, the wireless communication device demaps the NB-SSS from only a single subframe within each frame in which the NB-SSS is received. For example, in some embodiments, the wireless communication device may de-map the NB-SSS from subframe 9 within each frame in which the NB-SSS is received. Alternatively or additionally, the wireless communication device demaps the NB-PSS from only a single subframe within each frame in which the NB-PSS is received. For example, in some embodiments, the wireless communication device may de-map the NB-PSS from subframe 5 within each frame in which the NB-PSS is received. Regardless, in order to de-map the NB-PSS from only a single subframe, the wireless communication device may recover the NB-PSS from the sum of two base NB-PSS sequences.

In some embodiments, the wireless communication device demaps each of the NB-PSS and NB-SSS exclusively from one or more subframes that are immune to configuration as low interference subframes and are downlink subframes in all or a majority of possible time division duplex configurations of the radio network node. Alternatively or additionally, the wireless communication device demaps each of the NB-PSS and NB-SSS exclusively from one or more subframes that lack transmission of system information on a broadcast channel.

In some embodiments, the wireless communication device recovers the NB-PSS as different base NB-PSS sequences, and receives the NB-PSS by receiving different respective ones of the base NB-PSS sequences in different frames of the synchronization signal period, with only one base NB-PSS sequence received in any given frame. In such a case, the different base NB-PSS sequences may comprise two base NB-PSS sequences. The device may receive the NB-PSS within select frames of the synchronization signal period, and alternate every other one of the select frames between receiving one of the two base NB-PSS sequences and receiving the other of the two base NB-PSS sequences.

In some embodiments, the wireless communication device determines one or more parameters from the NB-PSS and/or the NB-SSS. The one or more parameters include one or more of: a narrowband deployment type indicating whether narrowband transmissions from the radio network node are in-band of a wideband transmission, in a guard band of a wideband transmission, or standalone; a transmission resource index indicating a location of narrowband transmissions that are located in-band of a wideband transmission; and an operation mode of the radio network node indicating whether the radio network node is operating in a frequency division duplexing mode or a time division duplexing mode.

In one or more embodiments, the wireless communication device acquires frame and symbol timing of a cell provided by the radio network node, based on the received NB-PSS and NB-SSS.

In any or all of these embodiments, the NB-PSS and NB-SSS may be narrowband internet of things (IoT) synchronization signals. In such a case, the synchronization signal period may be 80ms, a frame may be 10ms, and a subframe may be 1ms.

Embodiments herein also include a radio network node for transmitting a narrowband primary synchronization signal (NB-PSS) and a narrowband secondary synchronization signal (NB-SSS) within a synchronization signal period comprising multiple frames. The radio network node is configured to map the NB-PSS to the same one or more subframes within each frame in which the NB-PSS is to be transmitted. The radio network node is also configured to map the NB-SSS to the same one or more subframes within each frame in which the NB-SSS is to be transmitted, including at least one frame in which the NB-PSS is to be transmitted, by mapping the NB-SSS to one or more subframes that differ from the one or more subframes to which the NB-PSS is mapped. The radio network node is further configured to transmit the NB-PSS and NB-SSS within the synchronization signal period according to said mapping. In some embodiments, for instance, the radio network node is configured to transmit the NB-SSS in every other frame in which the NB-PSS is transmitted.

Embodiments herein further include a wireless communication device for receiving a narrowband primary synchronization signal (NB-PSS) and a narrowband secondary synchronization signal (NB-SSS) within a synchronization signal period comprising multiple frames. The wireless communication device is configured to receive the NB-PSS and NB-SSS within the synchronization signal period. This may include for instance receiving the NB-SSS in every other frame in which the NB-PSS is received. The wireless communication device is also configured to de-map the NB-PSS from the same one or more subframes within each frame in which the NB-PSS is received. The wireless communication device is further configured to de-map the NB-SSS from the same one or more subframes within each frame in which the NB-SSS is received, including at least one frame in which the NB-PSS is received, by de-mapping the NB-SSS from one or more subframes that differ from the one or more subframes from which the NB-PSS is de-mapped.

Embodiments herein thereby include a number of NB-IoT synchronization signal placement designs, addressing one or more aforementioned drawbacks associated with the known designs. Furthermore, the support of TDD and extended CP is considered.

BRIEF DESCRIPTION OF THE DRAWINGS

Figure 1 is a block diagram of a wireless communication system according to one or more embodiments.
Figure 2 is a logic flow diagram of a method implemented by a radio network node according to one or more embodiments.
Figures 3A-3B are block diagrams of different synchronization signal mappings according to one or more embodiments.
Figures 4A-4C are block diagrams of different subframe constraints taken into account in the synchronization signal mappings according to one or more embodiments.
Figures 5A-5B are block diagrams of different synchronization signal mappings according to one or more embodiments.
Figure 6 is a block diagram of a synchronization signal mapping according to one or more embodiments.
Figures 7A-7D are block diagrams of different synchronization signal mappings according to one or more embodiments.
Figure 8 is a block diagram of synchronization signal generation according to one or more embodiments.
Figure 9 is a logic flow diagram of a method implemented by a wireless communication device according to one or more embodiments.
Figure 10 is a block diagram of a radio network node according to one or more embodiments.
Figure 11 is a block diagram of a radio network node according to one or more other embodiments.
Figure 12 is a block diagram of a wireless communication device according to one or more embodiments.
Figure 13 is a block diagram of a wireless communication device according to one or more other embodiments.

DETAILED DESCRIPTION

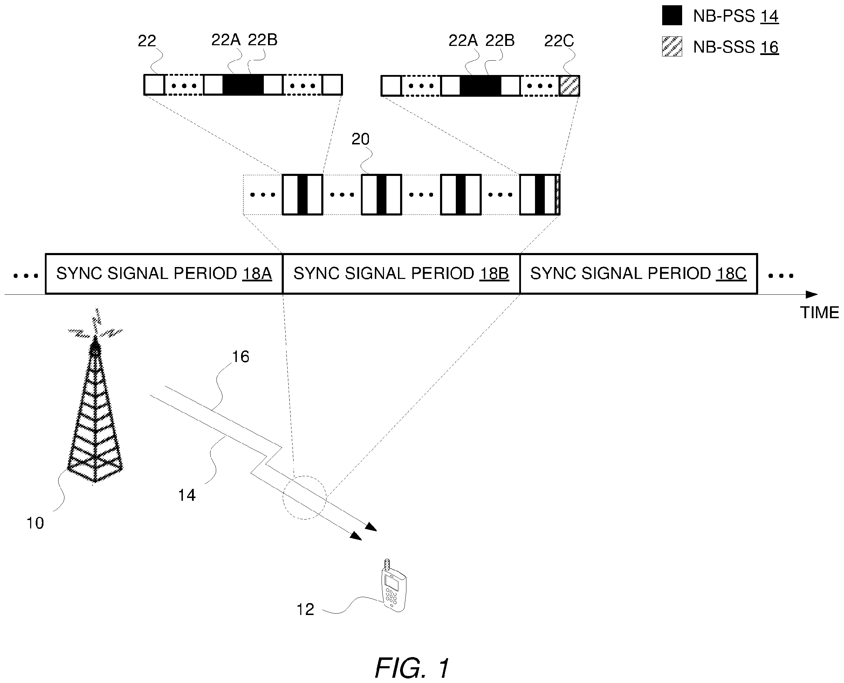

Figure 1 illustrates a radio network node 10 and a wireless communication device 12 in a wireless communication system according to one or more embodiments. The radio network node 10 is configured to transmit a narrowband primary synchronization signal (NB-PSS) 14 and a narrowband secondary synchronization signal (NB-SSS) 16, e.g., for narrowband Internet of Things (IoT). Depending on the node's deployment mode, these narrowband signals 14, 16 may be transmitted in standalone spectrum (e.g., re-farmed from GSM), in a guard band of a wideband transmission (e.g., a wideband LTE transmission), or in-band of a wideband transmission. Regardless, the wireless communication device 12 in some embodiments receives the narrowband synchronization signals 14, 16 as part of cell search, in order to acquire frame and symbol timing of a cell provided by the radio network node 10.

The radio network node 10 transmits the NB-PSS and NB-SSS within a synchronization signal period 18. Figure 1 shows multiple such periods 18 as periods 18A, 18B, 18C, etc. that periodically recur over time (e.g., every 80ms). Each synchronization signal period 18 comprises multiple so-called frames 20. A frame 20 is defined as being a specific amount of time (e.g., 10ms) at a certain level of granularity according to the wireless communication system's timing structure. Each frame 20 comprises multiple subframes 22. Each subframe 22 is similarly defined as being a specific amount of time (e.g., 1ms) at a lower level of granularity according to the system's timing structure.

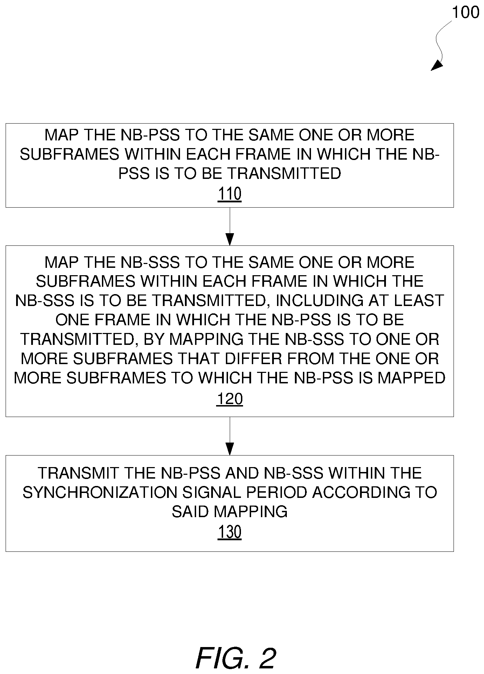

The radio network node 10 transmits the NB-PSS 14 and NB-SSS 16 within certain frames 20 and subframes 22, e.g., in order to achieve a certain synchronization signal density within a synchronization signal period 18. The radio network node 10 in this regard performs the processing shown in Figure 2 for transmitting the signals 14, 16 within a synchronization signal period 18.

As shown in Figure 2, processing at the radio network node 10 involves mapping the NB-PSS 14 to the same one or more subframes 22 within each frame 20 in which the NB-PSS is to be transmitted (Block 110). That is, the subframe(s) 22 in which the NB-PSS 14 is mapped are the same across the different frames 20 in which the NB-PSS 14 is transmitted (i.e., the positions of the subframes 22 within each frame 20 is the same). As shown in Figure 1, for example, the radio network node 10 maps the NB-PSS 14 to the same two subframes 22A and 22B within each frame 20 in which the NB-PSS 14 is to be transmitted. The position of these two subframes 22A and 22B is the same within each frame 20 (e.g., the NB-PSS 14 is mapped to subframe positions 4 and 5 within each frame 20 in which the NB-PSS 14 is transmitted).

Processing at the radio network node 10 similarly involves mapping the NB-SSS 16 to the same one or more subframes 22 within each frame 20 in which the NB-SSS 16 is to be transmitted (Block 110). Again, this means that the subframe(s) 22 in which the NB-SSS 16 is mapped are the same across the different frames 20 in which the NB-SSS 16 is transmitted (i.e., the positions of the subframes 22 within each frame 20 is the same). As shown in Figure 1, for example, the radio network node 10 maps the NB-SSS 16 to the same single subframe 22C within each frame 20 in which the NB-SSS 16 is to be transmitted.

Notably, the NB-SSS 16 is transmitted within at least one frame 20 in which the NB-PSS 14 is transmitted. That is, the radio network node 10 transmits the NB-PSS 14 and NB-SSS 16 within at least one frame 20 that is the same. The radio network node 10 accomplishes this by mapping the NB-SSS 16 to one or more subframes 22 that differ from the one or more subframes 22 to which the NB-PSS 14 is mapped. Figure 1 for instance shows the NB-PSS 14 and NB-SSS 16 both being transmitted within the last frame of a synchronization signal period 18, but the NB-PSS 14 is mapped to subframes 22A and 22B while the NB-SSS 16 is mapped to a different (non-overlapping) subframe 22C within that same frame. Regardless, processing 100 at the radio network node 10 further comprises transmitting the NB-PSS 14 and NB-SSS 16 within the synchronization signal period 18 according to this mapping (Block 130). In some embodiments, for instance, the radio network node 10 transmits the NB-SSS in every other frame in which the NB-PSS is transmitted.

Transmitting the NB-PSS and NB-SSS in this way advantageously facilitates higher synchronization signal density within the synchronization signal period 18. Indeed, by transmitting the NB-PSS 14 and NB-SSS 16 in different subframes (i.e., with different subframe positions in time), the NB-PSS 14 transmission density is not constrained by potential collision with the NB-SSS 16 transmission (e.g., the NB-PSS 14 and NB-SSS 16 may be transmitted within the same frame, because they are mapped to different subframes). Transmitting the NB-PSS 14 with higher density in time translates into synchronization that proves more robust in the face of low SNR (e.g., due to low transmission power for an in-band or guard band transmission of the narrowband synchronization signals 14, 16). Furthermore, the synchronization signal density is increased in this way without meaningful impact on the complexity demanded for synchronization signal detection, e.g., when the synchronization signals are transmitted using the same subframes in every frame.

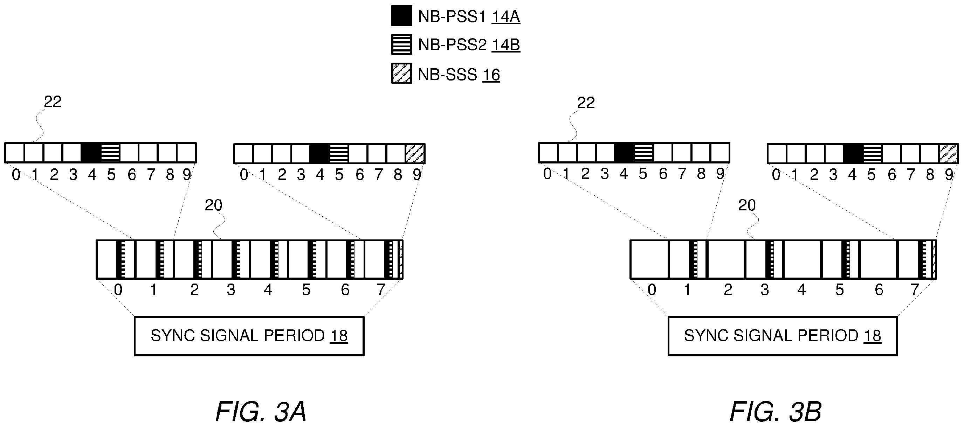

Figure 3A illustrates one non-limiting example of how NB-PSS 14 density is increased by mapping the synchronization signals 14, 16 according to the processing of Figure 2.

As shown in Figure 3A, a synchronization signal period 18 comprises eight frames 20, consecutively indexed or otherwise numbered as frames 0-7. Each frame 20 in turn comprises ten subframes 22, consecutively indexed or otherwise numbered as subframes 0-9. The radio network node 10 maps the NB-PSS 14 to the same two subframes 22 (indexed as subframes 4 and 5) in each frame in which the NB-PSS 14 is to be transmitted. More particularly in this example, the radio network node 10 generates the NB-PSS 14 as two different base sequences NB-PSS1 and NB-PSS2 (e.g., Zadoff-Chu sequences), and maps NB-PSS1 to subframe 4 and maps NB-PSS2 to subframe 5. By contrast, the radio network node 10 maps the NB-SSS 16 to only one subframe 22 in each frame 20 in which the NB-SSS 16 is transmitted (although two subframes may be used in other embodiments). Indeed, in at least some embodiments, transmission of the NB-SSS 16 in only one subframe still provides acceptable detection performance for the NB-SSS 16 even in low SNR environments. Regardless, this one subframe is different than any of the subframes to which the NB-PSS 14 is mapped. As shown, the node 10 maps the NB-SSS 16 to subframe 9, which is distinct from subframes 4 and 5 to which the NB-PSS 14 is mapped.

Mapping the NB-PSS 14 and NB-SSS 16 to different subframes (i.e., at different positions) in this way enables the radio network node 10 to transmit the NB-PSS 14 with higher density in the synchronization signal period 18, e.g., than would otherwise be possible without this mapping strategy. In fact, in the example of Figure 3A, the radio network node 10 transmits the NB-PSS 14 in every one of the eight frames 0-7 within the synchronization signal period 18. With lower density transmission of NB-SSS 16 proving sufficient in even the low SNR environments, the radio network node 10 by contrast transmits NB-SSS 16 in only one frame of the synchronization signal period 18; namely, the last frame 7. Where both the NB-PSS 14 and NB-SSS 16 are transmitted in the last frame 7 in this way, collision between the signals 14, 16 is avoided due to the signals 14, 16 occupying different subframes.

Moreover, the radio network node 10 still maintains flexibility regarding the density of the NB-PSS 14. In some embodiments, such as those shown in Figure 3B, the radio network node 10 instead transmits the NB-PSS 14 with lower density, by transmitting the NB-PSS 14 in every other frame 20, e.g., in only odd-numbered frames of a synchronization signal period 18 (i.e., 1, 3, 5, 7,...).

In at least some embodiments, the radio network node 10 maps the NB-PSS 14 and NB-SSS 16 to certain select subframes, based on one or more constraints that govern how different subframes are permitted to be used. These constraints may concern for instance whether any given subframe is configurable as a low interference subframe (e.g., a multicast-broadcast single frequency network, MBSFN, subframe), a downlink subframe, and/or a subframe in which system information may be transmitted on a broadcast channel. Regardless of the particular constraints, though, the radio network node 10 maps the NB-PSS 14 and NB-SSS 16 to certain subframes selected in such a way as to balance potentially competing constraints about how the subframes are to be used.

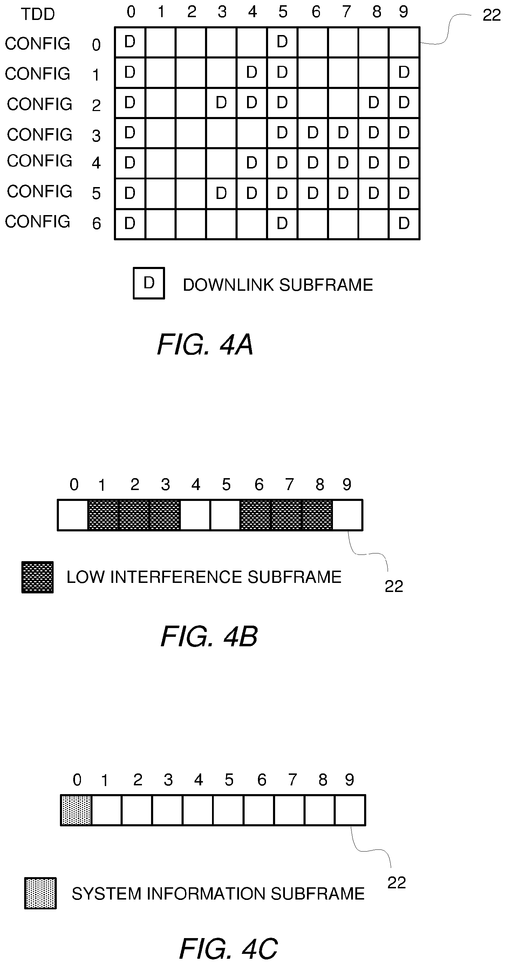

Consider for instance embodiments where a defined number of possible time division duplex (TDD) configurations govern which subframes are configurable as downlink subframes. Figure 4A illustrates seven such possible TDD configurations. As shown, subframes 0 and 5 are configured as downlink subframes in all seven possible TDD configurations, subframe 9 is configured as a downlink subframe in all possible TDD configurations except configuration 0, and subframes 4 and 8 are configured as downlink subframes in four out of three possible TDD configurations. Accounting for this, the radio network node 10 in some embodiments maps each of the NB-PSS 14 and NB-SSS 16 exclusively to one or more subframes that are downlink subframes in all (or a majority of) possible TDD configurations of the radio network node 10.

Alternatively or additionally, the radio network node 10 in its mapping accounts for the fact that certain subframes may be configurable as so-called low interference subframes. A low interference subframe is a subframe that causes no or a limited amount of interference to other subframes transmitted by a different transmitter on the same frequency resource. The radio network node 10 may for instance reduce its transmission power, e.g., as compared to a nominal transmission power for normal subframes, on one or more transmission resources within a low interference subframe (e.g., by puncturing or otherwise not transmitting on certain time-frequency resources). As one example, a low interference subframe may be a multicast-broadcast single frequency network (MBSFN) subframe.

In any event, the radio network node 10 in some embodiments maps each of the NB-PSS 14 and NB-SSS 16 exclusively to one or more subframes that are immune to configuration as low interference subframes. Figure 4B for instance illustrates one example where subframes 1-3 and 6-8 are configurable as low interference subframes. The radio network node 10 selects the subframes to which the NB-PSS 14 and NB-SSS 16 are to be mapped, by accounting for this. Indeed, in some embodiments, the radio network node 10 selects the subframes to which to map the NB-PSS 14 and NB-SSS 16 from the set consisting of subframes 0, 4, 5, and 9, since those subframes are immune to configuration as a low interference subframe.

In still other embodiments, the radio network node 10 in its mapping accounts for the fact that system information may be transmitted on a broadcast channel within certain subframes. Figure 4C for example illustrates that system information is transmitted on a broadcast channel (e.g., the narrowband physical broadcast channel, NB-PBCH) within subframe 0. In order to avoid a conflict with this system information transmission, the radio network node 10 in some embodiments maps each of the NB-PSS 14 and NB-SSS 16 exclusively to subframes that lack transmission of system information on a broadcast channel. In Figure 4C, for example, the radio network node 10 selects the subframes to which to map the NB-PSS 14 and NB-SSS 16 from the set consisting of subframes 1-9, since those subframes (always) lack transmission of system information.

In some embodiments, the radio network node 10 maps each of the NB-PSS 14 and NB-SSS 16 exclusively to one or more subframes that are immune to configuration as low interference subframes and are downlink subframes in all (or a majority of) possible TDD configurations of the radio network node 10. Consider for instance the embodiments already illustrated in Figures 3A-3B. There, the subframes to which the NB-PSS 14 and NB-SSS 16 are mapped (namely, subframes 4, 5, and 9) are immune to configuration as low interference subframes according to Figure 4B. Moreover, the subframes are downlink subframes in a majority of the possible TDD configurations in Figure 4A, namely, configurations 1, 2, 4, and 5 (subframe 9 is not a downlink subframe in configuration 0, and subframe 4 is not a downlink subframe in configuration 3 or 6). Figures 3A-3B further represent embodiments where the radio network node 10 also maps each of the NB-PSS 14 and NB-SSS 16 exclusively to one or more subframes that lack transmission of system information on a broadcast channel. Indeed, according to Figure 4C, no system information is transmitted on the subframes 4, 5, and 9 to which the NB-PSS 14 and NB-SSS 16 are mapped.

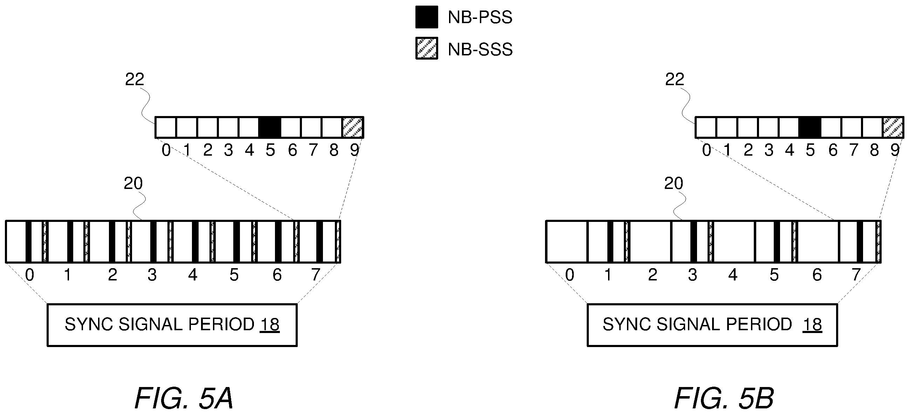

In other embodiments herein, the radio network node 10 maps the NB-PSS 14 and NB-SSS 16 to subframes that are compatible with a greater number of potential TDD configurations than the mappings in Figures 3A-3B. Figures 5A-5B illustrate different examples in this regard.

As shown in Figure 5A-5B, the radio network node 10 maps the NB-PSS 14 to only a single subframe within each frame in which the NB-PSS 14 is to be transmitted. Indeed, rather than mapping the NB-PSS 14 to subframes 4 and 5 as in Figures 3A-3B, the radio network node 10 maps the NB-PSS 14 to only subframe 5. In some embodiments, this advantageously means that the subframes to which the NB-PSS 14 and NB-SSS 16 are mapped (namely, subframes 5 and 9) are immune to configuration as low interference subframes according to Figure 4B, are downlink subframes in a majority of the possible TDD configurations in Figure 4A (namely, configurations 1-6, where subframe 9 is not a downlink subframe in configuration 0), and lack transmission of system information on a broadcast channel according to Figure 4C.

In order to map the NB-PSS 14 to only a single subframe, the radio network node 10 in some embodiments generates the NB-PSS 14 to comprise a single NB-PSS sequence. The radio network node 10 may for instance generate this single sequence from the sum of two base NB-PSS sequences. For example, the radio network node 10 may generate the same two base NB-PSS sequences transmitted in different subframes in Figures 3A-3B, namely sequences NB-PSS1 and NB-PSS2, but sum them together, e.g., as $\dfrac{1}{\sqrt{2}}$ (NB-PSS1 + NB-PSS2) in order to form a single combined sequence for transmission in a single subframe.

In some embodiments (not shown), the radio network node 10 still transmits the NB-SSS 16 in only one frame of the synchronization signal period 18 (e.g., the last frame), as in Figures 3A-3B, while mapping the NB-PSS 14 as shown in Figures 5A-5B. In other embodiments, though, the radio network node 10 transmits the NB-SSS 16 in more than one frame of the synchronization signal period 18. For example, as shown in Figures 5A-5B, the radio network node 10 may transmit the NB-SSS 16 in each frame in which the NB-PSS 14 is transmitted. Of course, in other embodiments, the radio network node 10 may transmit the NB-SSS 16 in fewer frames (e.g., in every other frame in which the NB-PSS 14 is transmitted).

Regardless, the radio network node 10 in at least some embodiments advantageously transmits the NB-SSS 16 at a higher density, e.g., than needed for detecting the NB-SSS 16 even in low SNR environments. The node 10 may exploit the increase in information-carrying capacity resulting from this higher density, or may otherwise utilize the NB-SSS 16, in order to signal one or more parameters to the wireless communication device 12. These one or more parameters may include for instance a narrowband deployment type indicating whether narrowband transmissions from the radio network node 10 are in-band of a wideband transmission, in a guard band of a wideband transmission, or standalone. Alternatively or additionally, the one or more parameters may include a transmission resource index indicating a location of narrowband transmissions that are located in-band of a wideband transmission (e.g., a physical resource block, PRB, index of a NB-IoT transmission with an in-band deployment). In still other embodiments, the one or more parameters additionally or alternatively include an operation mode of the radio network node 10 indicating whether the radio network node 10 is operating in a frequency division duplexing mode or a time division duplexing mode.

The radio network node 10 may signal these one or more parameters via the NB-SSS 16 in any number of ways. For example, the radio network node 10 may select a sequence on which the NB-SSS 16 is generated, based on the one or more parameters. In this way, the selected sequence and thereby the NB-SSS 16 encodes or implicitly indicates the one or more parameters. In other embodiments explained more fully below, the radio network node 10 implicitly indicates the one or more parameters by the way in which the NB-SSS 16 is transmitted (e.g., which subframes and/or frames in which the NB-SSS 16 is transmitted).

Alternatively or additionally, the radio network node 10 may signal any or all of the above-described parameters via the NB-PSS 14. The radio network node 10 in such cases may similarly select a sequence on which the NB-PSS 14 is generated, based on the one or more parameters. In this way, the selected sequence and thereby the NB-PSS 14 encodes or implicitly indicates the one or more parameters. In other embodiments, the radio network node 10 implicitly indicates the one or more parameters by the way in which the NB-PSS 14 is transmitted (e.g., which subframes and/or frames in which the NB-PSS 14 is transmitted).

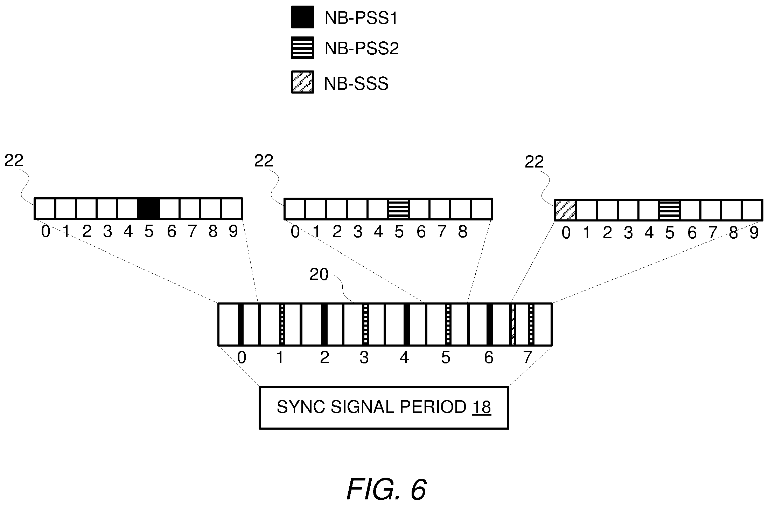

In yet other embodiments herein, the radio network node 10 maps the NB-PSS 14 and NB-SSS 16 to subframes that are compatible with an even greater number of potential TDD configurations than the mappings in Figures 3A-3B and 5A-5B. Figure 6 illustrate one example in this regard.

As shown in Figure 6, the radio network node 10 maps the NB-SSS 16 to only a single subframe. But rather than mapping the NB-SSS 16 to subframe 9, as in Figures 3A-3B and 5A-5B, the radio network node 10 maps the NB-SSS 16 to subframe 0. This means that the mapping is compatible with all of the possible TDD configurations illustrated in Figure 4A. Indeed, the subframes to which the NB-PSS 14 and NB-SSS 16 are mapped (namely, subframes 0 and 5) are designated as downlink subframes in all seven of the TDD configurations. Moreover, these subframes are immune to configuration as low interference subframes according to Figure 4B.

In some embodiments, the radio network node's mapping proves more compatible with possible TDD configurations, but at the expense of potential conflict with system information transmissions. As shown in Figure 4C, for example, system information may be transmitted on a broadcast channel in subframe 0. Mapping the NB-SSS 16 to subframe 0 as in Figure 6 thereby subjects the NB-SSS 16 to conflict with system information transmissions.

The radio network node 10 in various embodiments resolves this potential conflict by transmitting the NB-SSS 16 in as few frames as needed to achieve a target NB-SSS detection threshold, and transmitting system information in one or more of the other NB-SSS-free frames. As shown in Figure 6, for example, the radio network node 10 transmits the NB-SSS 16 in only the last frame (i.e., frame 7) of the synchronization signal period 18. As described above, such low density transmission may meet a target NB-SSS detection threshold, even in low SNR environments. And this frees up the remaining frames in the synchronization signal period 18 for system information transmission. For example, the system information may be transmitted within subframe 0 of frames 0-6, while NB-SSS 16 is transmitted within subframe 0 of frame 7. Omitting system information from this one frame only marginally degrades detection performance of the system information (e.g., of the NB-PBCH), e.g., by approximately 0.6 dB.

Note that Figure 6 also shows alternative embodiments for transmitting the NB-PSS 14 within a single subframe. Contrasted with the embodiments illustrated by Figures 5A-5B in which different base NB-PSS sequences are transmitted in combination at the same time, the radio network node 10 in these embodiments transmits different NB-PSS sequences at different times (without combining the sequences). Specifically, the radio network node 10 transmits different respective ones of the base NB-PSS sequences in different frames of the synchronization signal period 18. In some embodiments, only one base NB-PSS sequence is transmitted in any given frame.

Figure 6 illustrates an example with two base NB-PSS sequences (namely, NB-PSS1 and NB-PSS2), and where the radio network node 10 transmits a base NB-PSS sequence in every frame of the synchronization signal period 18. In this case, the radio network node 10 alternates every other frame between transmitting NB-PSS1 and transmitting NB-PSS2 (e.g., NB-PSS1 is transmitted in even-numbered frames, while NB-PSS2 is transmitted in odd-numbered frames). More generally, though, where the radio network node 10 transmits the NB-PSS within select frames of the synchronization signal period, the node 10 alternates every other one of the select frames between transmitting one of the two base NB-PSS sequences and transmitting the other of the two base NB-PSS sequences. In at least some embodiments, this approach advantageously enables the wireless communication device 12 to estimate both the frequency offset and the timing offset simultaneously (or in parallel).

Any of the above embodiments may be used separately or in combination. As an example of an isolated embodiment, the radio network node 10 may apply the same embodiment without regard to conditions that may affect signal density demands (e.g., always apply the embodiment in Figure 6 regardless of whether operating in TDD or FDD mode). As an example of combined embodiments, by contrast, the radio network node 10 may selectively apply different embodiments under different conditions and/or at different times.

In one or more such embodiments, the radio network node 10 applies one embodiment when operating in a TDD mode and applies a different embodiment when operating in a frequency division duplexing (FDD) mode. For example, the radio network node 10 may transmit the NB-PSS 14 and NB-SSS 16 according to the embodiment illustrated in Figure 6 when operating in TDD mode (e.g., to ensure compatibility with all possible TDD configurations), but transmit the NB-PSS 14 and NB-SSS 16 according to the embodiment illustrated in Figures 3A-3B or 5A-5B when operating in FDD mode (e.g., since TDD configuration compatibility is inapplicable). In such a case, the node's transmission of the NB-PSS 14 and NB-SSS 16 encodes or implicitly indicates the node's operating mode as being either TDD or FDD. The wireless communication device 12 may for instance identify the node's operating mode as being TDD or FDD based on evaluating the time separation between NB-PSS transmissions.

Alternatively or additionally, the radio network node 10 applies one embodiment when operating under conditions demanding relatively high synchronization signal density and applies a different embodiment when operating under conditions demanding only a relatively low synchronization signal density. Such conditions may for instance depend on the narrowband deployment mode of the radio network node, which may change dynamically or at a given point in time. For example, a standalone mode may produce conditions that demand a relatively lower synchronization signal density (e.g., a lower repetition interval), whereas in-band or guard band mode may produce conditions that demand a relatively higher synchronization signal density (e.g., a higher repetition interval).

In some embodiments, therefore, the radio network node 10 transmits the NB-PSS 14 and NB-SSS 16 according to the embodiments illustrated in Figure 3A, 5A, or 6 when operating in in-band or guard band mode, but transmits the NB-PSS 14 and NB-SSS 16 according to the embodiment illustrated in Figures 3B or 5B when operating in standalone mode. Alternatively, the radio network node 10 transmits the NB-PSS 14 and NB-SSS 16 according to the embodiments illustrated in Figure 3B or 5B when operating in in-band or guard band mode, but transmits the NB-PSS 14 and NB-SSS 16 according to another embodiment not shown when operating in standalone mode. One such non-shown embodiment may comprise for instance a modified version of Figure 3B or 5B, where the NB-PSS 14 and/or NB-SSS 16 are transmitted in only a subset of the shown frames and/or subframes (e.g., the NB-SSS 16 is transmitted in only frames 1 and 5, rather than 1, 3, 5, and 7).

Accordingly, the node's transmission of the NB-PSS 14 and NB-SSS 16 in these embodiments encodes or implicitly indicates the node's deployment mode as being either standalone, in-band, or guard band. The wireless communication device 12 may for instance identify the node's deployment mode as being standalone, in-band, or guard band based on evaluating the time separation between NB-PSS transmissions.

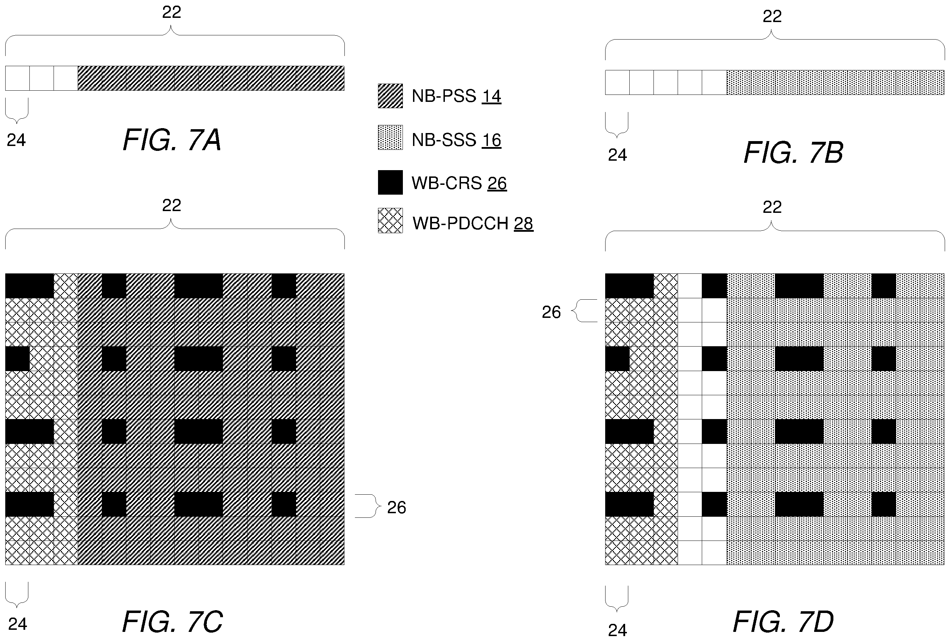

Those skilled in the art will appreciate that the NB-PSS 14 and NB-SSS 16 may be mapped more particularly to transmission resources within a given subframe in any of a number of ways. Figures 7A-87D illustrate a few examples in a context where the narrowband synchronization signals 14, 16 are transmitted in-band of a wideband LTE transmission. A subframe 22 in this example comprises multiple Orthogonal Frequency Division Multiplexing (OFDM) symbols 24.

Figures 7A-7B show that a subframe 22 comprises fourteen OFDM symbols 24. This is the case for instance when the synchronization signals 14, 16 are transmitted with a normal length cyclic prefix (CP). As shown in Figure 7A, the NB-PSS 14 may be transmitted within the last eleven of the subframe's OFDM symbols. The remaining OFDM symbols 24 are not used by the synchronization signals 14, 16, but instead are left free for transmission of wideband control information (e.g., the LTE PDCCH). Figure 7B shows that the NB-SSS 14 may be transmitted within the last nine of the subframe's OFDM symbols. Again, the remaining OFDM symbols 24 are not used, but instead are left free for other transmissions including wideband control information. Regardless, the NB-PSS 14 and NB-SSS 16 occupy a fixed number of OFDM symbols in each synchronization signal period 18.

Figures 7C-7D further show a so-called resource block that comprises multiple resource elements. Each resource element is a time-frequency resource formed as a combination of one OFDM symbol and one frequency subcarrier (e.g., of 15kHz). As shown, the NB-PSS 14 and NB-SSS 16 are punctured on certain resource elements by a wideband cell-specific reference signal (CRS) 26 (e.g., LTE CRS). The wideband CRS 26 also puncture transmission of wideband control information on a wideband physical downlink control channel (WB-PDCCH) 28, such as the LTE PDCCH. Transmitting the NB-PSS 14 and NB-SSS 16 in this way, to avoid conflict with CRS and PDCCH transmission, advantageously provides backwards compatibility with associated wideband transmissions (e.g., wideband LTE).

In other embodiments not shown, though, the NB-PSS 14 and NB-SSS 16 may occupy a different number of symbols within any given subframe 22. In some normal cyclic prefix embodiments, for example, the NB-PSS 14 spans 11 or 9 symbols in each subframe 22, and the NB-SSS 16 spans 6 to 11 symbols in each subframe 22.

Still other embodiments herein support extended cyclic prefixes (CP) that are longer in length than normal CP. With normal CP, each subframe comprises fourteen OFDM symbols, whereas with extended CP, each subframe comprises only 12 OFDM symbols. In some extended cyclic prefix embodiments, the NB-PSS 14 spans 9 symbols in each subframe 22, and the NB-SSS 16 spans 6 to 9 symbols in each subframe 22.

The radio network node 10 realizes support for both normal and extended CP in some embodiments by generating the NB-PSS 14 using base sequences of different lengths. For example, the radio network node 10 may generate the NB-PSS 14 using one or more base sequences of length 141 when transmitting with a normal CP, but may generate the NB-PSS 14 using one or more base sequences of length 133 when transmitting with an extended CP. No matter that length, though, the radio network node 10 may puncture certain symbols in the sequence to achieve a required number of symbols (e.g., 132) for mapping to the 9 OFDM symbols spanned by the NB-PSS 14.

In other embodiments, the radio network node 10 realizes support for both normal and extended CP by using different puncturing patterns for different normal and extended CP. Specifically, the radio network node 10 in some embodiments selects a length of a cyclic prefix with which to transmit the NB-PSS and NB-SSS. The node 10 then generates the NB-PSS 14 in different ways for different selected lengths. The node 10 does so by using the same one or more base NB-PSS sequences, irrespective of the selected CP length, but using different puncturing patterns for different selected CP lengths. For example, to generate the NB-PSS for normal CP, the radio network node 10 may puncture or remove a certain pattern of symbols from a length-141 base sequence; namely, the 13$^{th}$, 26$^{th}$, 51$^{st}$, 64$^{th}$, 77$^{th}$, 90$^{th}$, 103$^{rd}$, 116$^{th}$, and 141$^{st}$ symbols, in order to make the NB-PSS span eleven OFDM symbols. But to generate the NB-PSS for extended CP, the radio network node 10 may puncture or remove another pattern of symbols from the length-141 base sequence; namely, the 13$^{th}$, 14$^{th}$, 15$^{th}$, 28$^{th}$, 29$^{th}$, 30$^{th}$, 43$^{rd}$, 44$^{th}$, 45$^{th}$, 58$^{th}$, 59$^{th}$, 60$^{th}$, 73$^{rd}$, 74$^{th}$, 75$^{th}$, 88$^{th}$, 89$^{th}$, 90$^{th}$, 103$^{rd}$, 104$^{th}$, 105$^{th}$, 118$^{th}$, 119$^{th}$, 120$^{th}$, and 133$^{rd}$ through 141$^{st}$ symbols, in order to make the NB-PSS span nine OFDM symbols. Note that support for extended CP requires increasing the number of NB-PSS correlations by a factor of 2, in order to achieve satisfactory performance.

Since the NB-SSS occupies only 9 OFDM symbols in each occupied subframe in both normal and extended CP, no modification is required to enable support for extended cyclic prefix. Accordingly, the radio network node 10 in some embodiments generates the NB-SSS in the same way for different selected CP lengths.

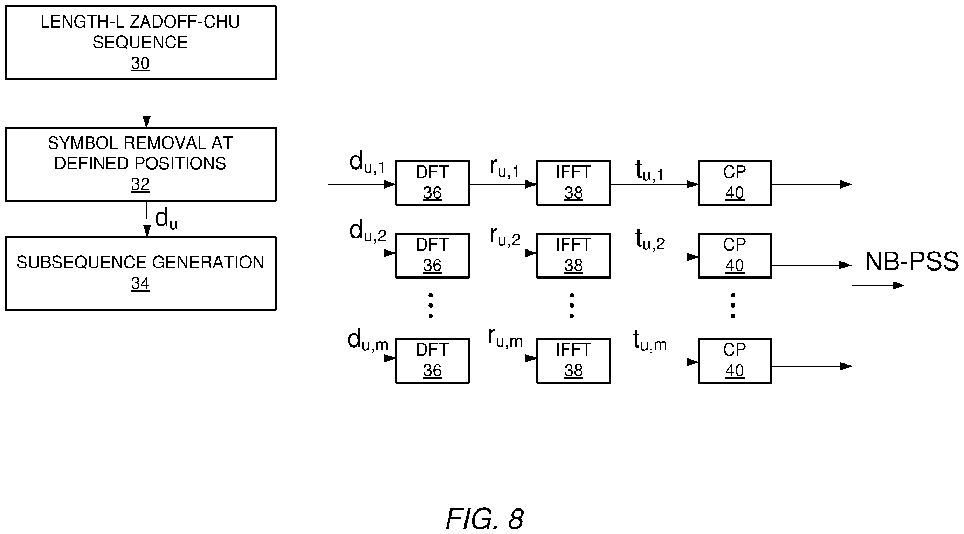

Figure 8 illustrates additional details of synchronization signal generation according to one or more embodiments. As shown, a base NB-PSS sequence with a length of L is obtained by a sequence obtaining module or circuit 30 in the form of a Zadoff Chu sequence. A symbol removal module or circuit 32 removes a certain pattern of symbols or elements from the sequence in order to obtain a punctured Zadoff-Chu (ZC) sequence $d_u$. For L = $N_{PSS}$ = 141, for example, the 13th, 26th, 51st, 64th, 77th, 90th, 103rd, 116th and 141st symbols may be removed to make the NB-PSS span element OFDM symbols. A subsequence generation module or circuit 34 then divides the punctured ZC sequence $d_u$ into m sub-sequences, shown as $d_{u,1}$, $d_{u,2}$, ... $d_{u,m}$. If the length of the sequences are not divisible by m, then zeros may be padded to make it divisible. A discrete Fourier Transform (DFT) 36 is then employed for each of these m sub-sequences to generate frequency domain representations $r_{u,1}$, $r_{u,2}$, ... $r_{u,m}$ of the sub-sequences. These frequency domain representations are input into an inverse fast Fourier transform module or circuit 38, in order to produce rate-converted versions $t_{u,1}$, $t_{u,2}$, ... $t_{u,m}$ of the sub-sequences; that is the rate-converted versions are at a different sampling rate (e.g., 1.92 kHz) due to the DFT and IFFT. A cyclic prefix (CP) module or circuit 40 is finally employed to add and CP and generate the synchronization signal NB-PSS.

Of course, in some embodiments, the NB-PSS consists of two Zadoff-Chu (ZC) sequences NB-PSS1 and NB-PSS2. NB-PSS1 is generated based on a $N_{PSS}$-length ZC sequence with root index 1, while NB-PSS2 is based on the complex conjugate of NB-PSS1:

$$NB - PSS_1(n) = \exp\left(-\frac{j\pi n(n+1)}{N_{PSS}}\right), \qquad n = 0,1,\dots,N_{PSS} - 1$$

$$NB - PSS_2(n) = \exp\left(\frac{j\pi n(n+1)}{N_{PSS}}\right), \qquad n = 0,1,\dots,N_{PSS} - 1$$

The NB-SSS design may also consist of two Zadoff-Chu (ZC) sequences NB-SSS1 and NB-SSS2, e.g., in embodiments not shown in any of the Figures where NB-SSS is transmitted in two subframes rather than just one. NB-SSS1 and NB-SSS2 in this case are generated based on a $N_{SSS}$-length ZC sequence with root index $u_1$ and $u_2$ respectively.

$$NB - SSS_1(n) = \exp\left(-\frac{j\pi u_1 n(n+1)}{N_{SSS}}\right), \qquad n = 0,1,\dots,N_{SSS} - 1$$

$$NB - SSS_2(n) = \exp\left(-\frac{j\pi u_2 n(n+1)}{N_{SSS}}\right), \qquad n = 0,1,\dots,N_{SSS} - 1$$

The length $N_{SSS}$ is chosen to be prime (e.g., 107) in order to enable support for upto $N_{SSS}$ - 1 different sequences. The combination of the two IDs ($u_1$, $u_2$) is sufficient to encode the physical cell ID and the timing within the synchronization signal period (e.g., an 80 ms block).

Alternatively, in other embodiments, the NB-SSS may consist of a single ZC sequence generated in a similar manner as NB-SSS1 or NB-SSS2.

Depending on the position of the frame where the NB-SSS is transmitted, a scrambling code may be applied on it in order to provide the correct timing within a synchronization signal period (e.g, an 80 ms block).

In order to enable support for 504 different physical cell IDs, e.g., in LTE-related embodiments, the radio network node 10 may use a combination of the roots and cyclic shifts of the different Zadoff Chu sequences.

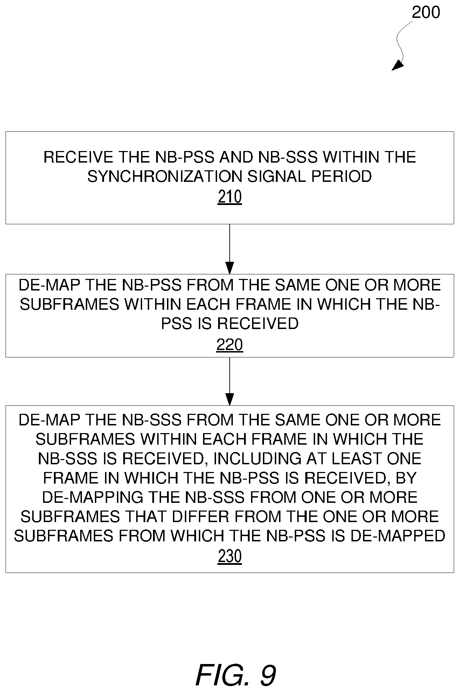

In view of the modifications and variations described above, those skilled in the art will appreciate that embodiments herein include corresponding processing performed at the wireless communication device 12 for receiving the NB-PSS 14 and NB-SSS 16, as transmitted by the radio network node 10. Figure 9 illustrations processing 200 performed by the wireless communication device 12 in this regard.

As shown, processing 200 at the device 12 includes receiving the NB-PSS 14 and NB-SSS 16 within the synchronization signal period 18 (Block 210). This may include for instance receiving the NB-SSS in every other frame in which the NB-PSS is received. Processing 200 further includes de-mapping the NB-PSS 14 from the same one or more subframes 22 within each frame 20 in which the NB-PSS 14 is received (Block 220). Processing 200 also entails de-mapping the NB-SSS 16 from the same one or more subframes 22 within each frame 20 in which the NB-SSS 16 is receive (Block 230). This includes at least one frame 20 in which the NB-PSS 14 is received. The device 12 does this by de-mapping the NB-SSS 16 from one or more subframes 22 that differ from the one or more subframes 22 from which the NB-PSS 14 is de-mapped. The device 12 may for instance employ reception processing as needed to recover the NB-PSS 14 and NB-SSS 16 as transmitted according to any of Figures 3-8. In at least some embodiments, the device 12 also acquires frame and symbol timing of a cell provided by the radio network node 10, based on the received NB-PSS 14 and NB-SSS 16.

In at least some embodiments, the radio network node 10 and wireless communication device 12 operate according to narrowband Internet of Things (NB-IoT) specifications. In this regard, embodiments described herein are explained in the context of operating in or in association with a RAN that communicates over radio communication channels with wireless communication devices, also interchangeably referred to as wireless terminals or UEs, using a particular radio access technology. More specifically, embodiments are described in the context of the development of specifications for NB-IoT, particularly as it relates to the development of specifications for NB-IoT operation in spectrum and/or using equipment currently used by E-UTRAN, sometimes referred to as the Evolved UMTS Terrestrial Radio Access Network and widely known as the LTE system. However, it will be appreciated that the techniques may be applied to other wireless networks, as well as to successors of the E-UTRAN. Thus, references herein to signals using terminology from the 3GPP standards for LTE should be understood to apply more generally to signals having similar characteristics and/or purposes, in other networks.

A radio network node 10 herein is any type of network node (e.g., a base station) capable of communicating with another node over radio signals. A wireless communication device 12 is any type device capable of communicating with a radio network node 10 over radio signals. A wireless communication device 12 may therefore refer to a machine-to-machine (M2M) device, a machine-type communications (MTC) device, a NB-IoT device, etc.. The wireless device may also be a UE, however it should be noted that the UE does not necessarily have a "user" in the sense of an individual person owning and/or operating the device. A wireless device may also be referred to as a radio device, a radio communication device, a wireless terminal, or simply a terminal - unless the context indicates otherwise, the use of any of these terms is intended to include device-to-device UEs or devices, machine-type devices or devices capable of machine-to-machine communication, sensors equipped with a wireless device, wireless-enabled table computers, mobile terminals, smart phones, laptop-embedded equipped (LEE), laptop-mounted equipment (LME), USB dongles, wireless customer-premises equipment (CPE), etc. In the discussion herein, the terms machine-to-machine (M2M) device, machine-type communication (MTC) device, wireless sensor, and sensor may also be used. It should be understood that these devices may be UEs, but are generally configured to transmit and/or receive data without direct human interaction.

In an IOT scenario, a wireless communication device as described herein may be, or may be comprised in, a machine or device that performs monitoring or measurements, and transmits the results of such monitoring measurements to another device or a network. Particular examples of such machines are power meters, industrial machinery, or home or personal appliances, e.g. refrigerators, televisions, personal wearables such as watches etc. In other scenarios, a wireless communication device as described herein may be comprised in a vehicle and may perform monitoring and/or reporting of the vehicle's operational status or other functions associated with the vehicle.

Note that the radio network node 10 as described above may perform the processing herein by implementing any functional means or units. In one embodiment, for example, the radio network node 10 comprises respective circuits configured to perform the steps shown in Figure 2. The circuits in this regard may comprise circuits dedicated to performing certain functional processing and/or one or more microprocessors in conjunction with memory. In embodiments that employ memory, which may comprise one or several types of memory such as read-only memory (ROM), random-access memory, cache memory, flash memory devices, optical storage devices, etc., the memory stores program code that, when executed by the one or more microprocessors, carries out the techniques described herein. That is, in some embodiments memory of the radio network node 10 contains instructions executable by the processing circuitry whereby the radio network node 10 is configured to carry out the processing herein.

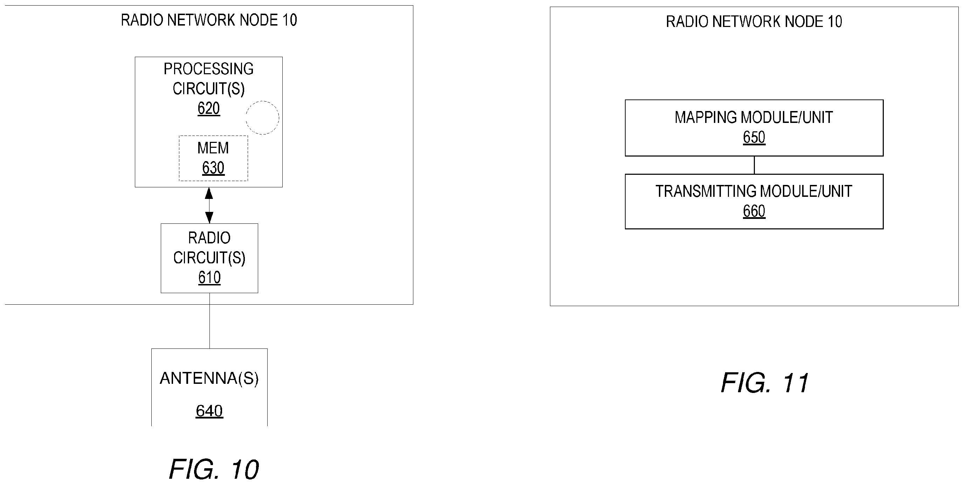

Figure 10 illustrates additional details of a radio network node 10 in accordance with one or more embodiments. As shown, the radio network node 10 includes one or more processing circuits 620 and one or more radio circuits 610. The one or more radio circuits 610 are configured to transmit via one or more antennas 640. The one or more processing circuits 620 are configured to perform processing described above, e.g., in Figure 2, such as by executing instructions stored in memory 630. The one or more processing circuits 620 in this regard may implement certain functional means or units.

Figure 11 in this regard illustrates a radio network node 10 in accordance with one or more other embodiments. As shown, the radio network node 10 may include a mapping module or unit 650 for mapping the NB-PSS 14 and NB-SSS 16 as described above, and a transmitting module or unit 660 for transmitting the NB-PSS 14 and NB-SSS 16, e.g., via the one or more radio circuits 610. These modules or units may be implemented by the processing circuit(s) 620 of Figure 10.

Also, the wireless communication device 12 may perform the processing herein by implementing any functional means or units. In one embodiment, for example, the wireless communication device 12 comprises respective circuits configured to perform the steps shown in Figure 9. The circuits in this regard may comprise circuits dedicated to performing certain functional processing and/or one or more microprocessors in conjunction with memory. In embodiments that employ memory, which may comprise one or several types of memory such as read-only memory (ROM), random-access memory, cache memory, flash memory devices, optical storage devices, etc., the memory stores program code that, when executed by the one or more microprocessors, carries out the techniques described herein. That is, in some embodiments memory of the device 12 contains instructions executable by the processing circuitry whereby the device 12 is configured to carry out the processing herein.

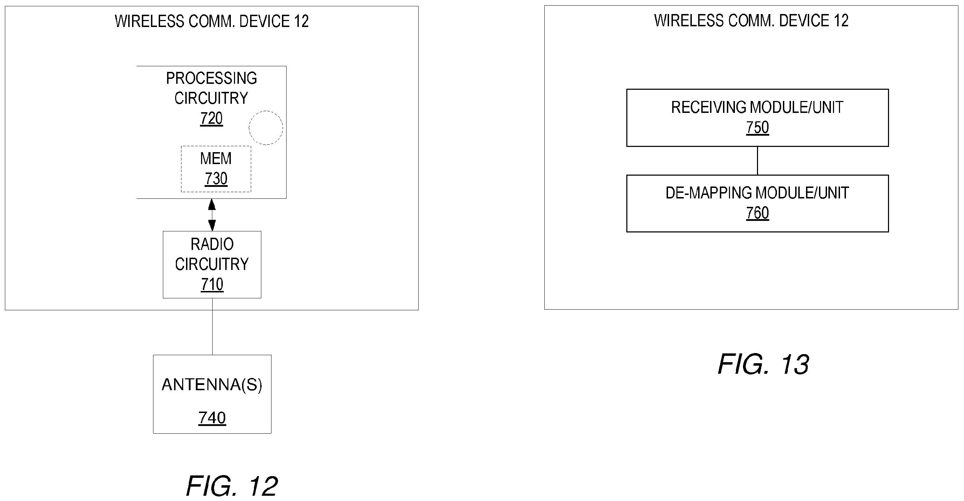

Figure 12 illustrates additional details of a wireless communication device 12 in accordance with one or more embodiments. As shown, the wireless communication device 12 includes one or more processing circuits 720 and one or more radio circuits 710. The one or more radio circuits 710 are configured to transmit via one or more antennas 740. The one or more processing circuits 720 are configured to perform processing described above, e.g., in Figure 9, such as by executing instructions stored in memory 730. The one or more processing circuits 720 in this regard may implement certain functional means or units.

Figure 13 in this regard illustrates additional details of a wireless communication device 12 in accordance with one or more other embodiments. As shown, the device 12 may include a receiving module or unit 750 for receiving the NB-PSS 14 and NB-SSS 16, e.g., via the one or more radio circuits 710, and a de-mapping module or unit 760 for de-mapping the NB-PSS 14 and NB-SSS 16 as described above. These units or modules may be implemented by the one or more processing circuits 720 in Figure 12.

Those skilled in the art will also appreciate that embodiments herein further include corresponding computer programs.

A computer program comprises instructions which, when executed on at least one processor of a node, cause the node to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

Those skilled in the art will recognize that the present invention may be carried out in other ways than those specifically set forth herein without departing from essential characteristics of the invention. The invention is defined by the appended claims.

**Claims**

1. A method implemented by a radio network node (10) for transmitting a narrowband primary synchronization signal, NB-PSS, and a narrowband secondary synchronization signal, NB-SSS, within a synchronization signal period comprising multiple frames, the method comprising:

    mapping (110) the NB-PSS to the same one or more subframes within each frame in which the NB-PSS is to be transmitted;
    mapping (120) the NB-SSS to the same one or more subframes within each frame in which the NB-SSS is to be transmitted, including at least one frame in which the NB-PSS is to be transmitted, by mapping the NB-SSS to one or more subframes that differ from the one or more subframes to which the NB-PSS is mapped; and
    transmitting (130) the NB-PSS and NB-SSS within the synchronization signal period according to said mapping, by transmitting the NB-SSS in every other frame in which the NB-PSS is transmitted.

2. The method of claim 1, comprising transmitting the NB-PSS in every frame of the synchronization signal period.

3. The method of any of claims 1-2, comprising mapping the NB-SSS to only a single subframe within each frame in which the NB-SSS is to be transmitted.

4. The method of any of claims 1-3, comprising mapping the NB-SSS to subframe 9 within each frame in which the NB-SSS is to be transmitted.

5. The method of any of claims 1-4, comprising mapping the NB-PSS to subframe 5 within each frame in which the NB-PSS is to be transmitted.

6. A method implemented by a wireless communication device (12) for receiving a narrowband primary synchronization signal, NB-PSS, and a narrowband secondary synchronization signal, NB-SSS, within a synchronization signal period comprising multiple frames, the method comprising:

    receiving (210) the NB-PSS and NB-SSS within the synchronization signal period, by receiving the NB-SSS in every other frame in which the NB-PSS is received;
    de-mapping (220) the NB-PSS from the same one or more subframes within each frame in which the NB-PSS is received; and
    de-mapping (230) the NB-SSS from the same one or more subframes within each frame in which the NB-SSS is received, including at least one frame in which the NB-PSS is received, by de-mapping the NB-SSS from one or more subframes that differ from the one or more subframes from which the NB-PSS is de-mapped.

7. The method of claim 6, comprising receiving the NB-PSS in every frame of the synchronization signal period.

8. The method of any of claims 6-7, comprising de-mapping the NB-SSS from only a single subframe within each frame in which the NB-SSS is received.

9. The method of any of claims 6-8, comprising de-mapping the NB-SSS from subframe 9 within each frame in which the NB-SSS is received.

10. The method of any of claims 6-9, comprising de-mapping the NB-PSS from subframe 5 within each frame in which the NB-PSS is received.

11. A radio network node (10) for transmitting a narrowband primary synchronization signal, NB-PSS, and a narrowband secondary synchronization signal, NB-SSS, within a synchronization signal period comprising multiple frames, the radio network node (10) configured to:

map the NB-PSS to the same one or more subframes within each frame in which the NB-PSS is to be transmitted;
map the NB-SSS to the same one or more subframes within each frame in which the NB-SSS is to be transmitted, including at least one frame in which the NB-PSS is to be transmitted, by mapping the NB-SSS to one or more subframes that differ from the one or more subframes to which the NB-PSS is mapped; and
transmit the NB-PSS and NB-SSS within the synchronization signal period according to said mapping, by transmitting the NB-SSS in every other frame in which the NB-PSS is transmitted.

12. The radio network node (10) of claim 11, configured to perform the method of any of claims 2-5.

13. The radio network node (10) of claim 11, wherein the radio network node (10) is configured to transmit the NB-PSS in every frame of the synchronization signal period.

14. The radio network node (10) of any of claims 11 and 13, wherein the radio network node (10) is configured to map the NB-SSS to only a single subframe within each frame in which the NB-SSS is to be transmitted.

15. A wireless communication device (12) for receiving a narrowband primary synchronization signal, NB-PSS, and a narrowband secondary synchronization signal, NB-SSS, within a synchronization signal period comprising multiple frames, the wireless communication device (12) configured to:

receive the NB-PSS and NB-SSS within the synchronization signal period, by receiving the NB-SSS in every other frame in which the NB-PSS is received;
de-map the NB-PSS from the same one or more subframes within each frame in which the NB-PSS is received; and
de-map the NB-SSS from the same one or more subframes within each frame in which the NB-SSS is received, including at least one frame in which the NB-PSS is received, by de-mapping the NB-SSS from one or more subframes that differ from the one or more subframes from which the NB-PSS is de-mapped.

16. The wireless communication device (12) of claim 15, configured to perform the method of any of claims 6-10.

17. The wireless communication device (12) of claim 15, wherein wireless communication device (12) configured to receive the NB-PSS in every frame of the synchronization signal period.

18. The wireless communication device (12) of any of claims 15 and 17, wherein the wireless communication device (12) configured to de-map the NB-SSS from only a single subframe within each frame in which the NB-SSS is received.

**Patentansprüche**

1. Verfahren, das durch einen Funknetzknoten (10) zum Übertragen eines primären Schmalbandsynchronisationssignals, NB-PSS, und eines sekundären Schmalbandsynchronisationssignals, NB-SSS, innerhalb eines Synchronisationssignalzeitraums implementiert wird, umfassend mehrere Rahmen, wobei das Verfahren Folgendes umfasst:

Abbilden (110) des NB-PSS auf den/die gleichen einen oder mehreren Unterrahmen innerhalb jedes Rahmens, in dem das NB-PSS übertragen werden soll;
Abbilden (120) des NB-SSS auf den/die gleichen einen oder mehreren Unterrahmen innerhalb jedes Rahmens, in dem das NB-SSS übertragen werden soll, einschließlich mindestens eines Rahmens, in dem das NB-PSS übertragen werden soll, durch Abbilden des NB-SSS auf einen oder mehrere Unterrahmen, die sich von dem einen oder den mehreren Unterrahmen unterscheiden, in denen das NB-PSS abgebildet ist; und
Übertragen (130) des NB-PSS und NB-SSS innerhalb des Synchronisationssignalzeitraums gemäß dem Abbilden, durch Übertragen des NB-SSS in jedem anderen Rahmen, in dem das NB-PSS übertragen wird.

2. Verfahren nach Anspruch 1, umfassend das Übertragen des NB-PSS in jedem Rahmen des Synchronisationssignalzeitraums.

**3.** Verfahren nach einem der Ansprüche 1-2, umfassend das Abbilden des NB-SSS auf nur einen einzelnen Unterrahmen innerhalb jedes Rahmens, in dem das NB-SSS übertragen werden soll.

**4.** Verfahren nach einem der Ansprüche 1-3, umfassend das Abbilden des NB-SSS auf Unterrahmen 9 innerhalb jedes Rahmens, in dem das NB-SSS übertragen werden soll.

**5.** Verfahren nach einem der Ansprüche 1-4, umfassend das Abbilden des NB-PSS auf Unterrahmen 5 innerhalb jedes Rahmens, in dem das NB-PSS übertragen werden soll.

**6.** Verfahren, das durch eine drahtlose Kommunikationsvorrichtung (12) zum Empfangen eines primären Schmalbandsynchronisationssignals, NB-PSS, und eines sekundären Schmalbandsynchronisationssignals, NB-SSS, innerhalb eines Synchronisationssignalzeitraums implementiert wird, umfassend mehrere Rahmen, wobei das Verfahren Folgendes umfasst:

Empfangen (210) des NB-PSS und NB-SSS innerhalb des Synchronisationssignalzeitraums durch Empfangen des NB-SSS in jedem anderen Rahmen, in dem das NB-PSS empfangen wird;

Rückabbilden (220) des NB-PSS von dem/den gleichen einen oder mehreren Unterrahmen innerhalb jedes Rahmens, in dem das NB-PSS empfangen wird; und

Rückabbilden (230) des NB-SSS von dem/den gleichen einen oder mehreren Unterrahmen innerhalb jedes Rahmens, in dem das NB-SSS empfangen wird, einschließlich mindestens eines Rahmens, in dem das NB-PSS empfangen wird, durch Rückabbilden des NB-SSS von einem oder mehreren Unterrahmen, die sich von dem einen oder den mehreren Unterrahmen unterscheiden, von denen das NB-PSS rückabgebildet wird.

**7.** Verfahren nach Anspruch 6, umfassend das Empfangen des NB-PSS in jedem Rahmen des Synchronisationssignalzeitraums.

**8.** Verfahren nach einem der Ansprüche 6-7, umfassend das Rückabbilden des NB-SSS von nur einem einzelnen Unterrahmen innerhalb jedes Rahmens, in dem das NB-SSS empfangen wird.

**9.** Verfahren nach einem der Ansprüche 6-8, umfassend das Rückabbilden des NB-SSS vom Unterrahmen 9 innerhalb jedes Rahmens, in dem das NB-SSS empfangen wird.

**10.** Verfahren nach einem der Ansprüche 6-9, umfassend das Rückabbilden des NB-PSS vom Unterrahmen 5 innerhalb jedes Rahmens, in dem das NB-PSS empfangen wird.

**11.** Funknetzknoten (10) zum Übertragen eines primären Schmalbandsynchronisationssignals, NB-PSS, und eines sekundären Schmalbandsynchronisationssignals, NB-SSS, innerhalb eines Synchronisationssignalzeitraums, umfassend mehrere Rahmen, wobei der Funknetzknoten (10) konfiguriert ist zum:

Abbilden des NB-PSS auf den/die gleichen einen oder mehreren Unterrahmen innerhalb jedes Rahmens, in dem das NB-PSS übertragen werden soll;

Abbilden des NB-SSS auf den/die gleichen einen oder mehreren Unterrahmen innerhalb jedes Rahmens, in dem das NB-SSS übertragen werden soll, einschließlich mindestens eines Rahmens, in dem das NB-PSS übertragen werden soll, durch Abbilden des NB-SSS auf einen oder mehrere Unterrahmen, die sich von dem einen oder den mehreren Unterrahmen unterscheiden, in denen das NB-PSS abgebildet ist; und

Übertragen des NB-PSS und NB-SSS innerhalb des Synchronisationssignalzeitraums gemäß dem Abbilden, durch Übertragen des NB-SSS in jedem anderen Rahmen, in dem das NB-PSS übertragen wird.

**12.** Funknetzknoten (10) nach Anspruch 11, der dazu konfiguriert ist, das Verfahren nach einem der Ansprüche 2-5 durchzuführen.

**13.** Funknetzknoten (10) nach Anspruch 11, wobei der Funknetzknoten (10) dazu konfiguriert ist, das NB-PSS in jedem Rahmen des Synchronisationssignalzeitraums zu übertragen.

**14.** Funknetzknoten (10) nach einem der Ansprüche 11 und 13, wobei der Funknetzknoten (10) dazu konfiguriert ist, das NB-SSS nur auf einen einzelnen Unterrahmen innerhalb jedes Rahmens abzubilden, in dem das NB-SSS übertragen werden soll.

**15.** Drahtlose Kommunikationsvorrichtung (12) zum Empfangen eines primären Schmalbandsynchronisationssignals, NB-PSS, und eines sekundären Schmalbandsynchronisationssignals, NB-SSS, innerhalb eines Synchronisationssignalzeitraums, umfassend mehrere Rahmen, wobei die drahtlose Kommunikationsvorrichtung (12) konfiguriert ist zum:

Empfangen des NB-PSS und NB-SSS innerhalb des Synchronisationssignalzeitraums durch Empfangen des NB-SSS in jedem anderen Rahmen, in dem das NB-PSS empfangen wird;
Rückabbilden des NB-PSS von dem/den gleichen einen oder mehreren Unterrahmen innerhalb jedes Rahmens, in dem das NB-PSS empfangen wird; und
Rückabbilden des NB-SSS von dem/den gleichen einen oder mehreren Unterrahmen innerhalb jedes Rahmens, in dem das NB-SSS empfangen wird, einschließlich mindestens eines Rahmens, in dem das NB-PSS empfangen wird, durch Rückabbilden des NB-SSS von einem oder mehreren Unterrahmen, die sich von dem einen oder den mehreren Unterrahmen unterscheiden, von denen das NB-PSS rückabgebildet wird.

**16.** Drahtlose Kommunikationsvorrichtung (12) nach Anspruch 15, die zum Durchführen des Verfahrens nach einem der Ansprüche 6-10 konfiguriert ist.

**17.** Drahtlose Kommunikationsvorrichtung (12) nach Anspruch 15, wobei die drahtlose Kommunikationsvorrichtung (12) dazu konfiguriert ist, das NB-PSS in jedem Rahmen des Synchronisationssignalzeitraums zu empfangen.

**18.** Drahtlose Kommunikationsvorrichtung (12) nach einem der Ansprüche 15 und 17, wobei die drahtlose Kommunikationsvorrichtung (12) dazu konfiguriert ist, das NB-SSS von nur einem einzelnen Unterrahmen innerhalb jedes Rahmens, in dem das NB-SSS empfangen wird, rückabzubilden.

**Revendications**

**1.** Procédé implémenté par un noeud de réseau radio (10) pour transmettre un signal de synchronisation primaire à bande étroite, NB-PSS, et un signal de synchronisation secondaire à bande étroite, NB-SSS, au cours d'une période de signal de synchronisation comprenant de multiples trames, le procédé comprenant :

le mappage (110) du NB-PSS à la même ou aux mêmes sous-trames au sein de chaque trame dans laquelle le NB-PSS doit être transmis ;
le mappage (120) du NB-SSS à la même ou aux mêmes sous-trames au sein de chaque trame dans laquelle le NB-SSS doit être transmis, incluant au moins une trame dans laquelle le NB-PSS doit être transmis, en mappant le NB-SSS à une ou plusieurs sous-trames qui diffèrent de la ou des sous-trames auxquelles le NB-PSS est mappé ; et la transmission (130) du NB-PSS et du NB-SSS au cours de la période de signal de synchronisation selon ledit mappage, en transmettant le NB-SSS dans chaque autre trame dans laquelle le NB-PSS est transmis.

**2.** Procédé selon la revendication 1, comprenant la transmission du NB-PSS dans chaque trame de la période de signal de synchronisation.

**3.** Procédé selon l'une quelconque des revendications 1 ou 2, comprenant le mappage du NB-SSS à une seule sous-trame unique au sein de chaque trame dans laquelle le NB-SSS doit être transmis.

**4.** Procédé selon l'une quelconque des revendications 1 à 3, comprenant le mappage du NB-SSS à la sous-trame 9 au sein de chaque trame dans laquelle le NB-SSS doit être transmis.

**5.** Procédé selon l'une quelconque des revendications 1 à 4, comprenant le mappage du NB-PSS à la sous-trame 5 au sein de chaque trame dans laquelle le NB-PSS doit être transmis.

**6.** Procédé implémenté par un dispositif de communication sans fil (12) pour recevoir un signal de synchronisation primaire à bande étroite, NB-PSS, et un signal de synchronisation secondaire à bande étroite, NB-SSS, au cours d'une période de signal de synchronisation comprenant de multiples trames, le procédé comprenant :

la réception (210) du NB-PSS et du NB-SSS au cours de la période de signal de synchronisation, en recevant le NB-SSS dans chaque autre trame dans laquelle le NB-PSS est reçu ;

le démappage (220) du NB-PSS par rapport à la même ou aux mêmes sous-trames au sein de chaque trame dans laquelle le NB-PSS doit être transmis ; et

le démappage (230) du NB-SSS par rapport à la même ou aux mêmes sous-trames au sein de chaque trame dans laquelle le NB-SSS est reçu, y compris au moins une trame dans laquelle le NB-PSS est reçu, en démappant le NB-SSS par rapport à une ou plusieurs sous-trames qui diffèrent de la ou des sous-trames desquelles le NB-PSS est démappé.

7. Procédé selon la revendication 6, comprenant la réception du NB-PSS dans chaque trame de la période de signal de synchronisation.

8. Procédé selon l'une quelconque des revendications 6 ou 7, comprenant le démappage du NB-SSS par rapport à une seule sous-trame unique au sein de chaque trame dans laquelle le NB-SSS est reçu.

9. Procédé selon l'une quelconque des revendications 6 à 8, comprenant le démappage du NB-SSS par rapport à la sous-trame 9 au sein de chaque trame dans laquelle le NB-SSS est reçu.

10. Procédé selon l'une quelconque des revendications 6 à 9, comprenant le démappage du NB-PSS par rapport à la sous-trame 5 au sein de chaque trame dans laquelle le NB-PSS est reçu.

11. Noeud de réseau radio (10) pour transmettre un signal de synchronisation primaire à bande étroite, NB-PSS, et un signal de synchronisation secondaire à bande étroite, NB-SSS, au cours d'une période de signal de synchronisation comprenant de multiples trames, le noeud de réseau radio (10) configuré pour :

mapper la NB-PSS à la même ou aux mêmes sous-trames au sein de chaque trame dans laquelle le NB-PSS doit être transmis ;

mapper le NB-SSS à la même ou aux mêmes sous-trames au sein de chaque trame dans laquelle le NB-SSS doit être transmis, y compris au moins une trame dans laquelle le NB-PSS doit être transmis, en mappant le NB-SSS à une ou plusieurs sous-trames qui diffèrent de la ou des sous-trames auxquelles le NB-PSS est mappé ; et

transmettre le NB-PSS et le NB-SSS au cours de la période de signal de synchronisation selon ledit mappage, en transmettant le NB-SSS dans chaque autre trame dans laquelle le NB-PSS est transmis.

12. Noeud de réseau radio (10) selon la revendication 11, configuré pour mettre en oeuvre le procédé selon l'une quelconque des revendications 2 à 5.

13. Noeud de réseau radio (10) selon la revendication 11, dans lequel le noeud de réseau radio (10) est configuré pour transmettre le NB-PSS dans chaque trame de la période de signal de synchronisation.

14. Noeud de réseau radio (10) selon l'une quelconque des revendications 11 et 13, dans lequel le noeud de réseau radio (10) est configuré pour mapper le NB-SSS à une seule sous-trame unique au sein de chaque trame dans laquelle le NB-SSS doit être transmis.

15. Dispositif de communication sans fil (12) pour recevoir un signal de synchronisation primaire à bande étroite, NB-PSS, et un signal de synchronisation secondaire à bande étroite, NB-SSS, au cours d'une période de signal de synchronisation comprenant de multiples trames, le dispositif de communication sans fil (12) configuré pour :

recevoir le NB-PSS et le NB-SSS au cours de la période de signal de synchronisation, en recevant le NB-SSS dans chaque autre trame dans laquelle le NB-PSS est reçu ;

démapper le NB-PSS par rapport à la même ou aux mêmes sous-trames au sein de chaque trame dans laquelle le NB-PSS est reçu ; et

démapper le NB-SSS par rapport à la même ou aux mêmes sous-trames au sein de chaque trame dans laquelle le NB-SSS est reçu, y compris au moins une trame dans laquelle le NB-PSS est reçu, en démappant le NB-SSS par rapport à une ou plusieurs sous-trames qui diffèrent de la ou des sous-trames desquelles le NB-PSS est démappé.

16. Dispositif de communication sans fil (12) selon la revendication 15, configuré pour mettre en oeuvre le procédé selon l'une quelconque des revendications 6 à 10.

17. Dispositif de communication sans fil (12) selon la revendication 15, dans lequel le dispositif de communication sans fil (12) est configuré pour recevoir le NB-PSS dans chaque trame de la période de signal de synchronisation.

18. Dispositif de communication sans fil (12) selon l'une quelconque des revendications 15 et 17, dans lequel le dispositif de communication sans fil (12) est configuré pour démapper le NB-SSS par rapport à une seule sous-trame unique au sein de chaque trame dans laquelle le NB-SSS est reçu.

*FIG. 1*

NB-PSS 14

NB-SSS 16

SYNC SIGNAL PERIOD 18A   SYNC SIGNAL PERIOD 18B   SYNC SIGNAL PERIOD 18C

TIME

EP 3 391 579 B1

100

MAP THE NB-PSS TO THE SAME ONE OR MORE
SUBFRAMES WITHIN EACH FRAME IN WHICH THE NB-
PSS IS TO BE TRANSMITTED
110

MAP THE NB-SSS TO THE SAME ONE OR MORE
SUBFRAMES WITHIN EACH FRAME IN WHICH THE
NB-SSS IS TO BE TRANSMITTED, INCLUDING AT LEAST
ONE FRAME IN WHICH THE NB-PSS IS TO BE
TRANSMITTED, BY MAPPING THE NB-SSS TO ONE OR
MORE SUBFRAMES THAT DIFFER FROM THE ONE OR
MORE SUBFRAMES TO WHICH THE NB-PSS IS MAPPED
120

TRANSMIT THE NB-PSS AND NB-SSS WITHIN THE
SYNCHRONIZATION SIGNAL PERIOD ACCORDING TO
SAID MAPPING
130

*FIG. 2*

■ NB-PSS1 <u>14A</u>

≣ NB-PSS2 <u>14B</u>

▨ NB-SSS <u>16</u>

SYNC SIGNAL PERIOD <u>18</u>

*FIG. 3A*

*FIG. 3B*

EP 3 391 579 B1

| TDD | | 0 | 1 | 2 | 3 | 4 | 5 | 6 | 7 | 8 | 9 | |
|---|---|---|---|---|---|---|---|---|---|---|---|---|
| CONFIG | 0 | D | | | | | D | | | | | ⌐ 22 |
| CONFIG | 1 | D | | | | D | D | | | | D | |
| CONFIG | 2 | D | | | D | D | D | | | D | D | |
| CONFIG | 3 | D | | | | | D | D | D | D | D | |
| CONFIG | 4 | D | | | | D | D | D | D | D | D | |
| CONFIG | 5 | D | | | D | D | D | D | D | D | D | |
| CONFIG | 6 | D | | | | | D | | | | D | |

D    DOWNLINK SUBFRAME

*FIG. 4A*

0 1 2 3 4 5 6 7 8 9

LOW INTERFERENCE SUBFRAME    22

*FIG. 4B*

0 1 2 3 4 5 6 7 8 9

SYSTEM INFORMATION SUBFRAME    22

*FIG. 4C*

NB-PSS

NB-SSS

22

0 1 2 3 4 5 6 7 8 9

20

0 1 2 3 4 5 6 7

SYNC SIGNAL PERIOD 18

*FIG. 5A*

22

0 1 2 3 4 5 6 7 8 9

20

0 1 2 3 4 5 6 7

SYNC SIGNAL PERIOD 18

*FIG. 5B*

EP 3 391 579 B1

EP 3 391 579 B1

FIG. 6

FIG. 7A

FIG. 7B

FIG. 7C

FIG. 7D

NB-PSS 14
NB-SSS 16
WB-CRS 26
WB-PDCCH 28

*FIG. 8*

EP 3 391 579 B1

200

```
┌─────────────────────────────────────────┐
│   RECEIVE THE NB-PSS AND NB-SSS WITHIN THE │
│        SYNCHRONIZATION SIGNAL PERIOD       │
│                   210                      │
└─────────────────────────────────────────┘
                    │
                    ▼
┌─────────────────────────────────────────┐
│  DE-MAP THE NB-PSS FROM THE SAME ONE OR MORE │
│ SUBFRAMES WITHIN EACH FRAME IN WHICH THE NB- │
│              PSS IS RECEIVED               │
│                   220                      │
└─────────────────────────────────────────┘
                    │
                    ▼
┌─────────────────────────────────────────┐
│  DE-MAP THE NB-SSS FROM THE SAME ONE OR MORE │
│    SUBFRAMES WITHIN EACH FRAME IN WHICH THE  │
│    NB-SSS IS RECEIVED, INCLUDING AT LEAST ONE │
│     FRAME IN WHICH THE NB-PSS IS RECEIVED, BY │
│       DE-MAPPING THE NB-SSS FROM ONE OR MORE  │
│  SUBFRAMES THAT DIFFER FROM THE ONE OR MORE  │
│ SUBFRAMES FROM WHICH THE NB-PSS IS DE-MAPPED │
│                   230                      │
└─────────────────────────────────────────┘
```

*FIG. 9*

EP 3 391 579 B1

RADIO NETWORK NODE 10

PROCESSING
CIRCUIT(S)
620

MEM
630

RADIO
CIRCUIT(S)
610

ANTENNA(S)
640

*FIG. 10*

RADIO NETWORK NODE 10

MAPPING MODULE/UNIT
650

TRANSMITTING MODULE/UNIT
660

*FIG. 11*

WIRELESS COMM. DEVICE 12

PROCESSING
CIRCUITRY
720

MEM
730

RADIO
CIRCUITRY
710

ANTENNA(S)

740

*FIG. 12*

WIRELESS COMM. DEVICE 12

RECEIVING MODULE/UNIT
750

DE-MAPPING MODULE/UNIT
760

*FIG. 13*

EP 3 391 579 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ERICSSON et al.** NB-LTE - General L1 Concept Description. *3GPP DRAFT; R1-156010,* 04 October 2015

- **HUAWEI et al.** NB-IOT - downlink physical layer concept description. *3GPP DRAFT; R1 -156462,* 15 November 2015